# EUROPÄISCHE PATENTSCHRIFT

(11) **EP 0 815 482 B1**
(45) Veröffentlichungstag und Bekanntmachung des Hinweises auf die Patenterteilung: **07.01.1999**
(21) Anmeldenummer: 96906760.2
(22) Anmeldetag: 13.03.1996
(51) Int. Cl.: G02B 21/22, G02B 7/12, A61B 3/00

(54) **MIKROSKOP, INSBESONDERE STEREOMIKROSKOP**
MICROSCOPE, IN PARTICULAR A STEREOMICROSCOPE
MICROSCOPE, EN PARTICULIER STEREOMICROSCOPE

(30) Priorität: 14.03.1995 CH 724/95; 14.03.1995 CH 723/95
(43) Veröffentlichungstag der Anmeldung: 07.01.1998
(73) Patentinhaber: Leica Mikroskopie Systeme AG, 9435 Heerbrugg (CH)
(72) Erfinder: STÜTTLER, Herbert, M., A-6830 Rankweil (AT)
(74) Vertreter: Stamer, Harald
(86) Internationale Anmeldenummer: EP9601054
(87) Internationale Veröffentlichungsnummer: WO9628752

(56) Entgegenhaltungen:
- EP-A- 0 283 749
- EP-A- 0 625 332
- DE-A- 4 018 400
- DE-A- 4 321 934
- JP-A- 5 066 340
- JP-A- 5 107 441
- JP-A- 5 127 065

## Beschreibung

Die Erfindung betrifft ein Mikroskop, insbesondere ein Stereomikroskop, mit wenigstens zwei Tuben mit einem verstellbaren Okular und einer automatischen, anderaugenabhängigen elektrischen Verstelleinrichtung dafür zur Adaption der optischen Eigenschaften des Strahlenganges im Mikroskop an die optischen Eigenschaften der Anwenderaugen.

In der Mikroskopie dient das Mikroskop als Vergrösserungseinrichtung von kleinen Objekten. Letztere müssen dabei häufig von Hand transportiert oder bewegt werden. Häufig muss an ihnen auch manipuliert werden, was insbesondere in der Operationsmikroskopie der Fall ist. Beim Manipulieren mit oder an Objekten sind unterschiedliche Bedingungen vorherrschend, die es manchmal schwer oder unerwünscht machen, Verstelleinrichtungen am Mikroskop zu bedienen. Gerade das Justieren von Okularen ist jedoch ein wichtiger Vorgang, um einem Anwender eine optimale und nicht ermüdende Sicht auf das Objekt zu erlauben. Bedingt durch ein gewisses Adaptions- oder Ermüdungsverhalten des Auges ist es manchmal sogar notwendig, Okulareinstellungen nachzujustieren, was mit den Mitteln des Standes der Technik einen Unterbruch der Manipulationen unter dem Mikroskop erfordert, um von Hand die Verstellung des Okulars vorzunehmen. Dieser ist jedoch unerwünscht, woraus sich die erste der Erfindung zugrundeliegende Aufgabe ergibt:

Die Vergrösserungseinrichtung mit ihrem Okular soll so beschaffen sein, dass ein Verstellen desselben ohne Handanlegung möglich ist, wobei dem physiologischen Unterschied zwischen zwei Augen eines Anwenders Rechnung getragen werden soll. Der bishenge Standard, nach dem der Sehschärfenunterschied zwischen zwei Augen Augen durch Adaption nur eines Okulars ausgeglichen wurde, soll überwunden werden, um Änderungen der Sehschärfe während eines Betrachtungszeitraumes bei beiden Anwenderaugen auszugleichen und dadurch Ermüdungserscheinungen vorzubeugen.

Gelöst wird diese Aufgabe durch den erfindungsgemässen Einsatz eines Mikroskops mit den Merkmalen des Anspruches 1.

Fernbedienbaren Verstelleinrichtung für ein Okular sind zwar per se schon bekannt, so z.B. in der EP-A2-625332.

Dort wurde eine automatische Okularadaption nach gemessenen physiologischen Anwenderaugeneigenschaften vorgeschlagen. Obzwar in diesem Dokument die Anwendung einer solchen Vorrichtung auch für ein Mikroskop angegeben wurde, wurde damals offensichtlich nicht erkannt, dass zur Erlangung optimalen Komforts es nicht ausreicht, nur für ein Anwenderauge zu adaptieren, da dies zu Ermüdungserscheinungen, Kopfschmerzen usw. führen kann, was insbesondere bei Operationsmikroskopen während einer Operation an Menschen oder Tieren unangenehme Folgen haben kann. Das wie bisher geübte permanente Nachführen der Objektivfokussierung bringt dabei kaum Hilfe, da dieses wieder anwendergesteuert sein müsste, was vom Anwender eigene Konzentration auf einen Einstellvorgang verlangt, anstelle den Anwender für seien eigentliche Arbeit unter dem Mikroskop freizustellen.

Die JP-A-5-66340 nimmt Bezug auf einen Feldstecher mit einem Dioptrienausgleich für beide Anwenderaugen am Feldstecher und zusätzlich einer automatischen Anpassung der beiden Okularstrahlengänge an den Augenabstand eines Anwenders. Es ist jedoch nicht naheliegend, Lehren aus einem anderen Gebiet der Optik unmittelbar auf die Mikroskopie anzuwenden, zumal sich in der Praxis unterschiedliche Fachleute herausgebildet haben, die die Entwicklung der einzelnen Fachgebiete von einander unterschiedlich weitertreiben, was auch erklärt, dass die spätere EP-A keinen Bezug auf die frühere JP-A bzw. deren Lehre nach Anwendung von Dioptrienausgleichen in beiden Strahlengängen nimmt.

Eine erfindungsgemässe Verstellvorrichtung kann mit verschiedenen Mitteln erreicht werden. Es braucht jedenfalls einen motorischen Antrieb für jedes Okular und eine Fernsteuerung für diesen Antrieb, die gegebenenfalls auch sprachgesteuert sein könnte, oder mittels Extremitäten eines Anwenders - z.B. von seinen Füssen - bedienbar oder triggerbar sein könnte. Auch sind Fernsteuerungen denkbar, die von anderen Personen auf Wunsch und nach Anweisung des Anwenders bedient werden.

Durch diesen ersten Schritt der Erfindung werden für verschiedene Anwendungsfälle enorme Fortschritte erzielt. So war es bisher im Bereich der Operationsmikroskopie stets äusserst schwierig, unter den an sich geforderten keimfreien Bedingungen, Okulareinstellungen für den Operateur vorzunehmen. Sobald dieser nämlich mit seinem Kopf in die Nähe des Mikroskops kommt, besteht die Gefahr, dass durch seinen Atem oder durch unabsichtliche Berührungen des Mikroskops mit seiner Mundmaske o.dgl. der Tubenbereich des Mikroskops kontaminiert wird. Eine nachträgliche Manipulation durch den Operateur oder einen Assistenten an den herkömmlichen Verstellvorrichtungen im Tubenbereich war daher immer mit dem Risiko verbunden, dass er seine sterilen Operationshandschuhe an deren Aussenseite kontaminiert. Als einziger Ausweg zur Vermeidung einer möglichen nachfolgenden Kontamination des Patienten müssten dann die Operationshandschuhe gewechselt werden, was zeitaufwendig und daher äusserst störend ist. Ein Voreinstellen von Okularen vor einer Operation war auch nicht ausreichend, zumal - wie schon erwähnt - die optischen Eigenschaften eines Auges Schwankungen unterliegen, die von der Tagesverfassung des Anwenders abhängen.

Gerade diese Tagesverfassung kann sich jedoch ändern und erfordert daher in der Regel jedesmal eine Neueinstellung des Okulars. Durch die Erfindung kann jedoch jede menschliche Manipulation am Mikroskop unterbleiben. Eine nachträgliche Fokussierung des Hauptobjektivs zur Adaptierung geänderter optischer Eigenschaften des Anwenderauges kann bei gleichbleibende Objekt-Mikroskop-Distanz unterbleiben, was natürlich insbesondere auch beim Anwenderwechsel von Vorteil ist.

Die selbsttätige und kontinuierliche Verstellung nach gemessenen Kriterien an jedem Auge beseitigt darüber hinaus ein bisher stets vorhandenes unangenehmes Phänomen, nach dem der Anwender bei der Vornahme der Okularadaption unwillkürlich das Adaptionsvermögen des Auges mitbeanspruchte, so dass es nicht zu einer optimalen Einstellung kam, was zusätzlich eine gewisse Ermüdungserscheinung des Auges mit sich brachte, die unter Umständen in Kopfweh oder ähnlichen Unannehmlichkeiten mit sich brachte.

Gerade unter diesem Aspekt ist die bevorzugte Variante, nach der sich die Messvorrichtung und die damit verbundene Verstelleinrichtung kontinuierlich nach den jeweiligen gemessenen optischen Eigenschaften orientiert, optimal, sie ermöglicht ein für die Augen völlig entspanntes Arbeiten mit dem Mikroskop. Unter kontinuierlich im Sinne der Erfindung ist sowohl ein ständiges Messen und Nachstellen als auch ein intermittierendes Messen und Verstellen zu verstehen.

Weitere Ausgestaltungen bzw. Varianten der Erfindung ergeben sich aus den Unteransprüchen bzw. sind dort beschrieben.

Eine Messvorrichtung, die im Betriebszustand einen - insbesondere unsichtbaren, z.B. infraroten - Messstrahl für das Abbilden eines Bildes an der Netzhaut des Anwenderauges verwendet, hat sich dabei als ideal herausgestellt. Wenn sie über ein CCD oder einen funktionsähnlichen Sensor mit den jeweils notwendigen Abbildungsoptiken und eine Messdatenauswertevorrichtung verfügt, kann das im Betriebszustand an der Netzhaut abgebildete Bild optimal ausgenutzt werden, um daraus die optischen Eigenschaften des Anwenderauges abzuleiten.

Solche Messvorrichtungen sind per se in der Augenmedizin als patientenunabhängige Messgeräte zur Vermessung der Fehlsichtigkeiten bekannt. Der Fachmann kann bei der Realisierung der vorliegenden Erfindung auf diese bekannten Vorrichtungen (wie z.B. auch in der EP-A2 beschrieben) zurückgreifen. Selbstverständlich umfasst die Erfindung nicht nur Messvorrichtungen, die direkte Bilder mit Konturen abbilden und vermessen, sondern auch Laserspecle Analysatoren usw.

Die hier angegebenen Erfindungen sind besonders geeignet, mit der Lehre der Schweizer Patentanmeldung CH 3217/94 kombiniert zu werden. Insofern gelten die Merkmale der Figuren und der dazugehörenden Beschreibung als im Rahmen dieser Anmeldung liegend ebenso geoffenbart. Die Kombination von einer augengesteuerten Bedienung eines Mikroskops und seiner Zusatzgeräte mit einer ferngesteuerten oder automatischen Okularadaption ist besonders vorteilhaft. Insofern empfiehlt sich, dass die Messdatenauswertevorrichtung mit einer Datenverarbeitungsvorrichtung verbunden ist, die im Betriebszustand die Augen- bzw. Pupillenstellung des Anwenderauges zur Steuerung von Stellorganen, Geräten oder Vorrichtungen usw. entsprechend der Schweizer Patentanmeldung CH 3217/94 gleichzeitig miterfasst. Wobei unter Umständen ein einziges CCD pro Strahlengang genügt.

Wenn die Messdatenauswertevorrichtung und/oder die Datenverarbeitungseinrichtung einen Speicher für das Abspeichern und automatische Abrufen von Einstellungsdaten bzw. -vorgängen des Mikroskops in Abhängigkeit von eingebbaren Anwendern umfasst, können die Mess- und Einstellungsroutinen bzw. deren zeitlicher Ablauf noch verkürzt werden, zumal dann jeweils eine grobe Voreinstellung in Abhängigkeit von dem angekündigten Anwender vorgenommen werden kann.

Natürlich liegen im Rahmen der Erfindung auch Varianten mit einer Eingabetastatur, Drehknöpfen o.dgl. zum händischen Eingeben bestimmter Voreinstellungswerte.

Bei der detaillierten Ausgestaltung der Messvorrichtung mag es vorteilhaft sein, wie an sich bekannt, zur Erzeugung des Messstrahls eine Leucht- oder Laserdiode, insbesondere im IR-Bereich vorzusehen, deren Licht durch eine, dem Okular oder dem Anwenderauge zugewandte Loch- oder Schlitzschablone fällt, um die Form des Bildes (Form der Schablone) auf der Netzhaut zu bestimmen.

Bei Stereomikroskopen ist üblicherweise eine Augenabstandseinstellvorrichtung, die gemäss einer weiteren Ausgestaltung der Erfindung, die jedoch auch unabhängig von der Erfindung verwendet werden kann, vorgesehen, dass auch diese fernbedienbar ist und eine Pupillenpositionserkennungseinrichtung umfasst, die die Position jeder Pupille jedes Anwenderauges von der diesem zugeordneten Strahlengangmitte erkennbar macht, so dass automatisch der Tubenabstand an den Augenabstand des Anwenders anpassbar ist, wobei vorzugsweise die Augenabstandseinstellvorrichtung analog zur räumlichen Verstellung der Tuben auch die Messvorrichtung und, wenn erforderlich, auch die Loch- oder Schlitzblende und/oder die Diode für den Messstrahl verstellt. Die Pupillenpositionserkennungsvorrichtung, wie sie in der Schweizer Patentanmeldung CH 3217/94 beschrieben ist, lässt sich dabei besonders gut anwenden. Sie gestattet beide Funktionen, nämlich das Entgegennehmen von Befehlen über eine Augenbewegung, wie auch das Einmitten des betreffenden Strahlenganges auf die tatsächliche Sehrichtung des Auges. Auch hier wird vorteilhafterweise wieder eine händische Verstellung hinfällig. Werden dabei auf dem CCD bzw. auf dem Messsensor sowohl das Bild aus der Loch- oder Schlitzblende auf der Netzhaut als auch die Abbildung des Umfanges der Pupille des Anwenderauges abgebildet, so kann dieses gleichzeitig als Mass für die Zentrierung um die Strahlengangmitte dienen, sofern das abgesandte Messbild, z.B. aus der Loch- oder Schlitzblende, in einer festen Beziehung zur Strahlengangmitte steht. Hilfsweise kann auch die Reflexion dieses Bildes an der Augenoberfläche als Referenz herangezogen werden, da es dort in etwa derselben Bildebene wie die Pupille bzw. das Sehloch liegt.

Bevorzugt kann natürlich auch die Messeinrichtung für den Dioptrienausgleich bzw. die Okularverstellung so ausgelegt sein, dass sie gleichzeitig die Augenabstandsinformation liefert.

Neu und erfinderisch ist somit weiters der erfindungsgemässen Einsatz einer elektrisch fernbedienbaren Verstelleinrichtung für wenigstens einen der beiden Tuben in horizontaler Richtung in Abhängigkeit vom Augenabstand eines Anwenders.

Eine solche fernbedienbare Verstellvorrichtung kann mit verschiedenen Mitteln erreicht werden, wobei die Lehre von dem anderen optischen Fachgebiet der

Feldstechertechnologie gemäss der JP-A erfindungsgemäss zum Einsatz gelangen kann.

Es braucht jedenfalls einen motorischen Antrieb für den verstellbaren Tubus bzw. für beide verstellbaren Tuben und eine Fernsteuerung für diesen Antrieb, die z.B. sprachgesteuert sein kann, oder mittels anderen Extremitäten eines Anwenders - z.B. von seinen Füssen- bedienbar ist. Auch sind Fernsteuerungen denkbar, die von sanderen Personen auf Wunsch und nach Anweisung des Anwenders bedient werden. Funkfernsteuerungen sind selbstverständlich mitumfasst.

Durch diesen Erfindungsschritt werden für verschiedene Anwendungsfälle enorme Fortschritte erzielt. So war es bisher im Bereich der Operationsmikroskopie stets äusserst schwierig unter den an sich geforderten keimfreien Bedingungen Tubeneinstellungen für den Operateur vorzunehmen. Sobald dieser nämlich mit seinem Kopf in die Nähe des Mikroskops kommt, besteht die Gefahr, dass - wie schon erwähnt - durch seinen Atem oder durch unabsichtliche Berührungen des Mikroskops mit seiner Mundmaske o.dgl. der Tubenbereich des Mikroskops kontaminiert wird.

Eine nachträgliche Manipulation durch den Operateur an den herkömmlichen Verstellvorrichtungen im Tubenbereich war daher immer mit dem Risiko verbunden, dass er seine sterilen Operationshandschuhe an deren Aussenseite kontaminiert.

Ein Voreinstellen des Tubenabstandes vor einer Operation war auch nicht optimal, zumal dies einen zusätzlichen Zeitaufwand bedeutete und den Nachteil hatte, dass beim Sterilisieren bzw. Reinigen des Mikroskops die Tuben nicht mehr verstellt werden durften, was kaum durchsetzbar war.

Abgesehen davon kann sich jedoch während einer Anwendung die Notwendigkeit ergeben, dass ein anderer Anwender an die Stelle des ersten Anwenders tritt und daher in der Regel eine Neueinstellung der Tuben nötig wird. Dieses erfordert jedoch trotz erfindungsgemässer Fernsteuerung einen gewissen Aufwand. Daher liegt der Erfindung in einem zweiten Schritt eine weitere Aufgabe zugrunde, nach der jede menschliche Manipulation an der Tubeneinstellung unterbleiben kann.

Diese weitere Aufgabe wird durch die Anwendung einer erfindungsgemässen Verstelleinrichtung, die im Betriebszustand in Abhängigkeit vom tatsächlichen Augenabstand des jeweiligen Anwenders selbsttätig - und gegebenenfalls kontinuierlich - den Tubus bzw. die Tuben verstellt, gelöst.

Im Sinne dieser neuen Lösung ist es denkbar, die tatsächlichen Augenabstände des betreffenden Anwenders an- bzw. einzugeben (z.B. 71mm), bevorzugt ist jedoch eine Variante der Erfindung, nach der wenigstens einem Anwenderauge eine Messvorrichtung für das Messen seiner Position in bezug auf die optische Mittelachse des betroffenen Strahlengang zugeordnet ist, wobei die Messvorrichtung die Verstellvorrichtung steuert.

Bei einer solchen bevorzugten Ausführung kann die Tubeneinstellung somit nach objektiven (gemessenen) Kriterien selbsttätig vonstatten gehen, was dem Anwender sehr entgegenkommt.

Die selbsttätige Verstellung nach gemessenen Kriterien beseitigt darüber hinaus ein bisher stets vorhandenes unangenehmes Phänomen, nach dem der Anwender bei der Vornahme der Okularadaption unwillkürlich das Adaptionsvermögen des Auges mitbeanspruchte, so dass es nicht zu einer optimalen Einstellung kam, was ein gewisses Schielen und dadurch Ermüdungserscheinungen mit sich brachte, die sich unter Umständen in Kopfweh oder ähnlichen Unannehmlichkeiten äusserten.

Gerade unter diesem Aspekt ist die bevorzugte Variante, nach der sich die Messvorrichtung und die damit verbundene Verstelleinrichtung jeweils nach den jeweiligen gemessenen Augenabständen - gegebenenfalls sogar kontinuierlich - orientiert, optimal; sie ermöglicht ein für die Augen völlig entspanntes Arbeiten mit dem Mikroskop. Unter kontinuierlich im Sinne der Erfindung ist sowohl ein ständiges Messen mit einer eigenen Messvorrichtung und kontinuierliches Nachstellen, als auch ein intermittierendes oder fallweises Messen und Verstellen zu verstehen. Die Art der Verstellung ist nach Bedarf so zu wählen, dass in möglichst kürzester Zeit das gewünschte Einstellergebnis erzielt wird. Bekannte Try-And-Error-Verfahren oder andere an sich bekannte Suchstrategien liegen dabei im Rahmen der Erfindung.

Weitere Ausgestaltungen bzw. Varianten der Erfindung ergeben sich aus den Unteransprüchen, bzw. sind dort beschrieben.

Die Erfassung der Augenpositionen relativ zur Strahlengangmitte erfolgt günstigerweise durch eine Beleuchtung für das Beleuchten der Augenoberfläche eines Anwenderauges und eine Vorrichtung zur Abbildung dieser Oberfläche auf einem Messsensor, insbesondere auf einem CCD, der bzw. das relativ zur Mittelachse des Strahlenganges positioniert ist. Eine sich daraus ableitende Steuermöglichkeit wirkt optimal direkt auf die Tubenverstellung zurück. Beliebige Hinweise für die technische Realisierung von solchen Einrichtungen zur Ermittlung der Position einer Pupille eines Anwenderauges bzw. der Sichtlinie dieses Auges können beispielsweise den folgenden Dokumenten bzw. dem dort zitierten Stand der Technik entnommen werden:

US-A-5296888, US-A-5245371, EP-A-605246, EP-A-602895, DE-A-4337098. Dem Fachmann sind nach Kenntnis der Lehre der vorliegenden Anmeldung Kombinationen mit den Gegenständen der erwähnten Dokumente möglich.

Um für die automatischen Verstellmöglichkeiten eine vorteilhafte Referenz zu ermöglichen, ist gemäss einer Weiterbildung vorgesehen, dass im Okularbereich eine Positionierauflage für den Kopf bzw. das Gesicht eines Anwenders vorgesehen ist, die durch Fixierung von Gesichtspartien des Anwenders als Horizontal- und/oder Vertikalreferenz und/oder Entspannungshalterung für die Einstellung des Okulars (8) und des Tubenabstandes dient.

Mit einer solchen Ausrüstung muss ein Anwender, um die gewünschte Sicht auf das zu betrachtende Objekt zu erhalten, lediglich mit seinem Kopf die Positionierauflage berühren und in Richtung Objekt blicken. Alle nötigen Einstellungen werden sodann bevorzugt automatisch vorgenommen, so dass Handanlegen am Mikroskop überflüssig wird. Der selbe vorteilhafte Effekt ergibt sich natürlich auch bei einer Anwendung dieses Erfindungsaspekts bei anderen Binokularen Um ein unnötiges Messen und Verstellen zu vermeiden, kann vorgesehen sein, dass ein Sensor oder Schalter die Kopfnähe überwacht, so dass eine einmal gewählte Einstellung erhalten bleibt, auch wenn der Anwender seinen Kopf vom Tubenbereich entfernt. Dadurch lassen sich Leerläufe der Mess- und Einstelleinrichtungen vermeiden.

Der Messvorgang und insbesondere die IR-Messstrahlabgabe sind bevorzugt mit der Taktfrequenz des betreffenden CCD's getaktet, um eine überflüssige IR-Belastung des Auges zu vermeiden.

Im Rahmen der Erfindung liegen jedoch auch Kombinationen mit schon bekannten Fernsteuermechanismen, z.B. mit einem Fussschalter, der im Unterschied zum Bekannten nur mehr eine Funktion hat, z.B. die des "Anklickens" bzw. Aktivierens eines entsprechenden Symbols bei der Steuerung durch die Augenbewegung oder z.B. einen Einstellzyklus befiehlt, sobald ein Anwender es wünscht, z.B. bei einem Anwenderwechsel.

Weiters wird auf die Lehren der Anmeldung der Anmelderin CH 1092/94 verwiesen, da die dort geoffenbarten kleinen Einblendelemente optimal bei einer erfindungsgemässen Vergrösserungseinrichtung zum Einsatz gelangen können; etwa um einen eingeblendeten Laserstrahl auf das Auge zu richten.

Im Zusammenhang mit der gegebenenfalls erforderlichen Abstandsmessung zwischen Hauptobjektiv und Objekt bzw. betrachteten Objektdetail wird auf die Lehre der Anmeldung PCT EP 9501301 der Anmelderin verwiesen, welche zum Zwecke der Darstellung einer möglichen Ausführungsvariante der Erfindung als hierin geoffenbart gilt. Das betrifft jeweils insbesondere die Figuren und die dazugehörigen Beschreibungsteile. Für die Schärfenmessung im vom Auge anvisierten Bereich des Objektes kann beispielsweise auch eine Bildsignalverarbeitung eingesetzt sein, die z.B. die Randschärfe von bestimmten Konturen misst und daraus auf die Abbildungsschärfe rückschliesst und automatisch entsprechende Stellorgane ansteuert, um die Abbildungsschärfe zu verbessern, woraus sich eine praktisch vollautomatische Vergrösserungseinrichtung ergibt.

Eine eigenständige Erfindung, die jedoch zusammen mit den oben beschriebenen erfindungsgemässen Merkmalen besonders günstig zum Einsatz kommt, ergibt sich - insbesondere bei einem Video- und/oder Operationsmikroskop, wo man seit langem versucht, eine räumlich kompakte Bauweise zu erreichen - wenn jedem Okular eine Strahlengangumlenkeinrichtung (z.B. vier Umlenkspiegel) zugeordnet ist, die den Okularstrahlengang bzw. Vergrösserungsstrahlengang der Vergrösserungseinrichtung gegen die Vorrichtungsmitte und aus dieser heraus umlenkt, so dass zwischen den Okularen und dem Hauptobjektiv (Hauptobjektiven) Raum für Zusatzgeräte geschaffen ist, in dem z.B. Videokameras, Einblendeinrichtungen, LCD-Bildschirme, Elektronik usw. untergebracht werden kann.

Durch einen solchen Aufbau wird bei gleicher - oder sogar vergrösserter - Stereobasis im Bereich des oder der Hauptobjektive(s) ein Minimum an Bauvolumen erzeugt.

Im Zusammenhang mit den anderen Erfindungsmerkmalen ist ein solcher Aufbau günstig, da mit der seitlichen Verschiebbarkeit eines der Umlenkspiegel pro Strahlengang die gewünschte Augenabstandsadaption erreichbar ist. In der Regel werden dabei jedoch auch die Okulare und Tuben mit diesem verstellbaren Umlenkspiegel bewegungsgekoppelt sein, um dem Anwender bei optimaler Einstellung jeweils einen zentrierten Blick durch den Tubus zu ermöglichen. Diese spezielle Ausgestaltung bietet als weiteren - gegebenenfalls auch unabhängig von der Augenabstandseinstellung verwendbaren - Effekt, dass Zoomeinrichtungen, Fokussiereinrichtungen o.dgl. an dem Ort untergebracht werden können, an dem die beiden binokularen Strahlengänge einander am nächsten sind. Dies führt zu Einsparungen an Linsen-Quantität (bei ursprünglich zwei getrennten Zooms oder Fokussiereinrichtungen) oder an Linsendurchmessern (wenn ursprünglich auch nur ein Linsensatz für beide Strahlengänge vorgesehen war) und reduziert Antriebsprobleme für diese Einrichtungen. Ausserdem bauen Zoom und Fokussiereinrichtung dementsprechend klein.

Weitere Details und Merkmale der Erfindung sind in den Patentansprüchen offengelegt und gekennzeichnet. Insofern ist die vorgängige Darstellung nicht erfindungsbeschränkend. Der Schutzbereich ergibt sich aus dem Wortlaut der Ansprüche, die Offenbarung aus dem Gesamttext dieser und der zitierten Anmeldungen der Anmelderin.

Anhand von beispielhaften, mittels Skizzen dargestellten Ausführungsbeispielen wird die Erfindung näher erläutert. Es zeigen dabei:
- Fig.1: eine Symboldarstellung eines Tubus mit aufgesetzter Messeinrichtung und verstellbarem Okular;
- Fig.1a: ein Detail aus Fig.1;
- Fig.2: einen Teil einer binokularen Vergrösserungsvorrichtung mit fernsteuerbarer Tubenabstandsverstellung;
- Fig.2a: ein Detail aus Fig.2;
- Fig.3: eine Symboldarstellung eines vollautomatischen Mikroskops;
- Fig.4: eine Symboldarstellung eines Mikroskops mit zwei Okularen und einer erfindungsgemässen fernsteuerbaren Augenabstandseinstellvorrichtung;
- Fig.5: eine Variante dazu mit Zoom und Vergrösserungseinstellung im verjüngten Bereich;
- Fig.6: eine Variante mit einer Messvorrichtung 33;
- Fig.7: eine symbolische Darstellung eines Messaufbaus zur Ermittlung der Anwenderpupillenpositionierung;
- Fig.8: ein Detail eines Messaufbaus mit einem beleuchteten Fadenkreuz und einem Umlenkspiegel und

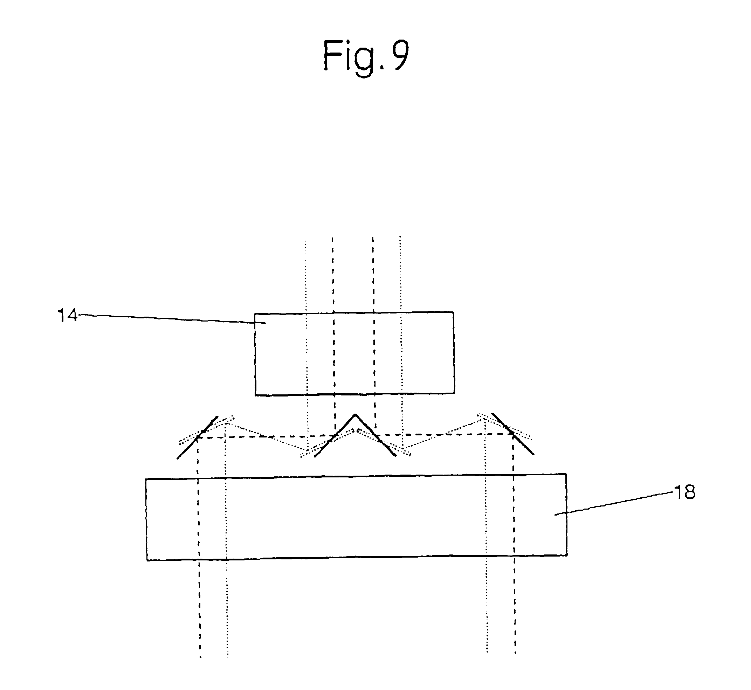

- Fig.9: eine symbolische Darstellung eines Schielfehlerausgleichs mit beweglichen, mit der Zoomverstellung gekoppelten Umlenkspiegeln im Strahlengang beispielsweise entsprechend einem Aufbau gemäss DE-A1-4123279 Fig.7, wie er gemäss einer Weiterbildung der Erfindung optimal eingesetzt werden könnte.

Die Figuren werden zusammenhängend beschrieben. Gleiche Bezugszeichen bedeuten gleiche Bauteile. Funktionsähnliche Bauteile tragen gleiche Bezugszeichen mit unterschiedlichen Indizes. Im Hinblick auf die Kombinationsmöglichkeit mit den erwähnten anderen Patentanmeldungen der Anmelderin ist die Bezugszeichenliste im wesentlichen fortlaufend geführt.

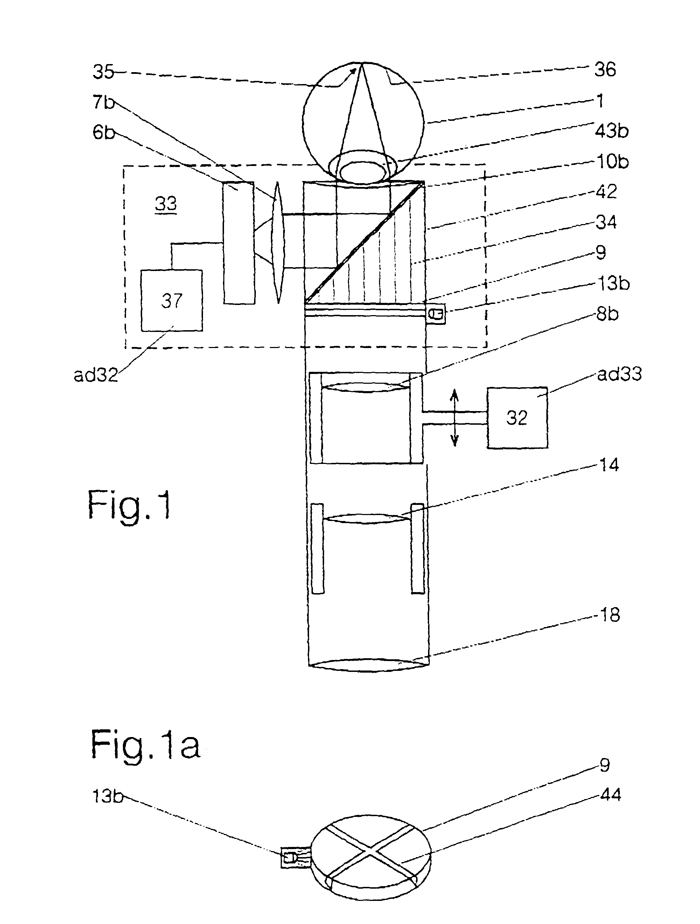

Fig.1 zeigt ein Anwenderauge 1 mit Pupille 43b und Netzhaut 36, auf die das Bild 35 eines Fadenkreuzes 9 abgebildet wird. Das Fadenkreuz ist beispielhaft in der folgenden Darstellung, jedoch auch unabhängig von den übrigen erfindungsbestimmenden Merkmalen anwendbar und stellt somit eine eigene Erfindung dar. Es besteht aus einer im Prinzip völlig durchsichtigen Scheibe, an deren Rand eine Leuchtdiode 13b so angekoppelt ist, dass sie die Scheibe mit Licht - im vorliegenden Fall insbesondere IR-Licht - durchflutet. Die Ankopplung ist so gemacht, dass Lichtstrahlen aus der Leuchtdiode im wesentlichen nur unter einem Totalreflexionswinkel an die Grenzfläche Glas/ oder Kunststoff/Luft treten. An einer Oberseite 44 ist die Scheibe fadenkreuzartig geätzt, sandstrahlgeblasen o.dgl., so dass dort die Totalreflexion unterbrochen wird und Licht austritt.

Dem Fadenkreuz 9 ist ein Teilerspiegel 10b vorgeschaltet, durch den das Anwenderauge in den Strahlengang und damit auf das Fadenkreuz schaut. Dieses wird somit durch die Linse des Auges 1 auf dessen Netzhaut abgebildet. Der Teilerspiegel 10b wirkt andererseits mit einem CCD 6b bzw. mit einer Abbildungsoptik 7b zusammen, die das Bild 35 von der Netzhaut abbilden bzw. in elektronische Impulse umwandeln, aus denen in bekannter Weise - z.B. mittels Bildverarbeitung, Randschärfenbestimmung etc. - auf die optischen Eigenschaften des Auges rückgeschlossen wird. Zu diesem Zweck ist eine Messdatenauswertevorrichtung 37 vorgesehen, deren Auswertesignal auf einen Stellantrieb einer Verstelleinrichtung 32 rückgeführt ist, die das Okular 8b im Tubus 42 so verstellt, dass allfällige Fehlsichtigkeiten des Auges 1 kompensiert werden.

Im Tubus 42 sind weiters ein herkömmliches Zoom und ein Hauptobjektiv zu sehen.

Bei dem dargestellten Beispiel ist es nicht wesentlich, ob der Blick auf das Objekt rein durch optische Bauteile ermöglicht wird, oder ob eventuell auch eine Videosignalverarbeitung zwischengeschaltet ist, wie z.B. bei einer Videokamera, bei der der Sucher mit einem eigenen kleinen Bildschirm eine Okularverstellung zur Adaption aufweist.

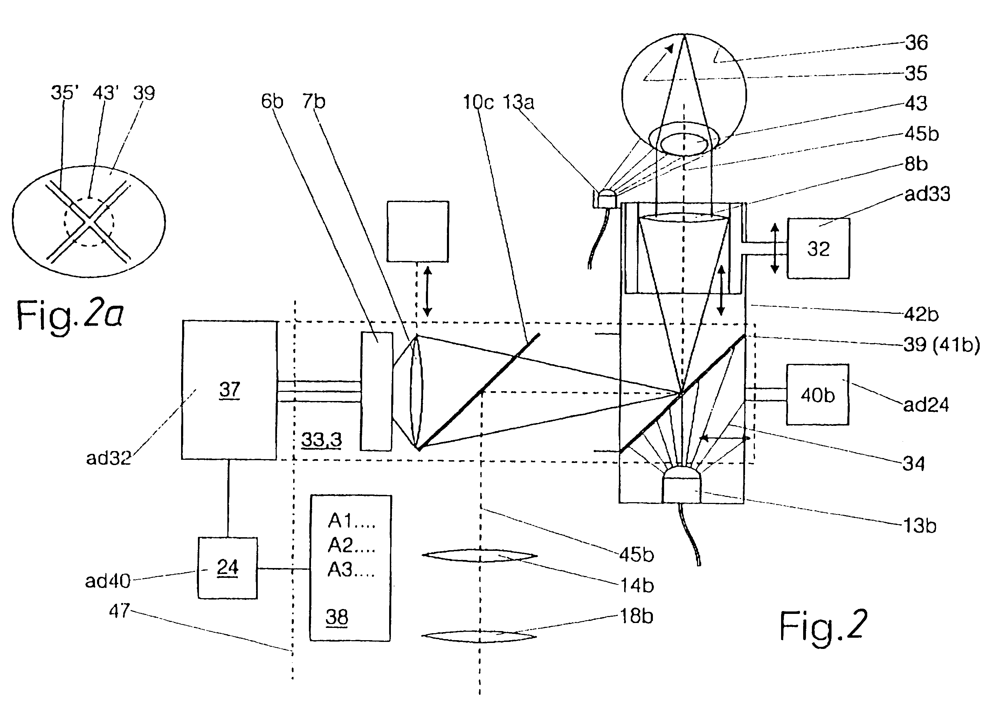

Fig.2 zeigt symbolisch einen Teilstrahlengang eines binokularen Mikroskopes mit einer Strahlengangmitte 45b, die im Normalfall möglichst zentrisch durch das Sehloch bzw. die Pupille gehen sollte. Um dies zu erreichen, ist eine seitliche Tubenverstellung vorgesehen, die über eine Augenabstandseinstellvorrichtung 40b angetrieben wird. Die Zentrizität wird dabei wie folgt gemessen:

Eine Leuchtdiode (bevorzugt IR-Licht) 13a beleuchtet die Augenoberfläche. Deren Bild wird durch das Okular 8b über einen Spiegel (10b,39) und durch einen Teilerspiegel 10c sowie über eine Abbildungsoptik 7b auf ein CCD 6b abgebildet. Die Pupille erscheint dort somit kreisscheibenähnlich. Da das CCD 6b in bezug auf die Strahlengangmitte 45 einjustiert ist, kann die Messdatenauswertevorrichtung 37 erkennen, ob das Abbild der Pupille zentrisch dazu liegt. Liegt es azentrisch, regelt 37 über die Einstellvorrichtung 40b die Einstellung des Tubus in bezug auf die Augenposition.

Der Umlenkspiegel 41b ist gleichzeitig als Loch- bzw. Schlitzblende ausgebildet, deren Draufsicht in Fig.2a zu sehen ist. Sie verfügt über einen dünnen, kreuzförmigen bzw. fadenkreuzähnlichen Schlitz, durch den Licht einer darunterliegenden Leuchtdiode 13b in das Auge 1 dringen kann. Bevorzugt ist auch hier IR-Licht

gewählt, so dass der Schlitz für das Auge ebenso wie das Fadenkreuz aus Fig.1 unsichtbar ist und nicht wahrgenommen wird.

Analog zur Abbildung des Fadenkreuzes 9 wird das Bild des Schlitzes auf der Netzhaut 36 abgebildet und von dort über Okular 8b und wieder Umlenkspiegel 41b in das CCD 6b abgebildet. Alternativ könnte auch ein zweites CCD für die Auswertung der optischen Eigenschaften des Anwenderauges vorgesehen sein. In Fig. 2 ist ein Antrieb angedeutet, der die Abbildungsoptik 7b so verändert, dass einmal die Augenoberfläche und einmal die Netzhaut auf das CCD abgebildet werden. Die Abbildung der Pupille 43 ist nicht nur für die Zentrierung des Strahlenganges wichtig sondern auch für die mit dem Auge gegebenenfalls durchzuführenden Befehle gemäss der Anmeldung CH 3217/94.

Entfallen solche Aufgaben, kann auch auf die zusätzliche Beleuchtung mittels Diode 13a verzichtet werden, da dann das Licht aus dem Schlitz der Schlitzblende 39 genügt, um Teile der Augenoberfläche so zu beleuchten, dass eine Auswertung hinsichtlich Zentrierung möglich ist.

In der Regel werden alle Funktionen und Steuerungen der beschriebenen Geräte von der Datenverarbeitung gesteuert. Zur schnelleren Datenverarbeitung ist dieser Datenverarbeitung 24 eine Datenaufbereitungseinheit 25 gemäss zitierter Anmeldung CH 1091/94 (Leica Box)vorgeschaltet, die alle, zum Teil unterschiedlichen Datenformate auf ein gemeinsam verarbeitbares Format umwandelt bzw. Befehlsdaten in geeignete Gerätesteuerungsdaten umwandelt.

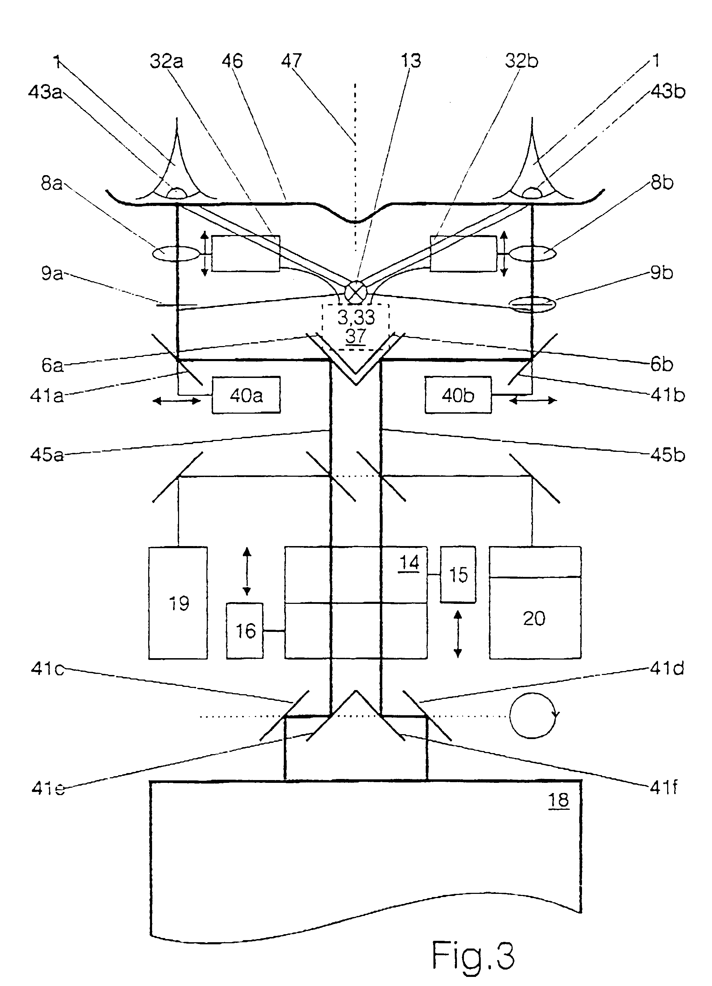

Fig.3 zeigt schematisch eine Positionierauflage 46, auf die sich ein Anwender mit dem Gesicht stützen kann, um so zu einer Referenzlage in Bezug auf das Mikroskop zu kommen. Im Unterschied zu den Fig.1 und 2 ist hier ein Fadenkreuz 9b mit infraroter Auflichtbeleuchtung symbolisiert und die Umlenkspiegel 41 a und b sind somit lichtundurchlässig.

Fig.3 zeigt ausserdem den Vorteil des Hand in Hand mit der Erfindung gehenden Versatzes der Tuben zueinander, zumal derart ein einziges Zoom 16, sowie eine einzige Fokuseinstellvorrichtung 14 für beide Strahlengänge genutzt werden kann, ohne die Stereobasis vor dem Hauptobjektiv einzuschränken.

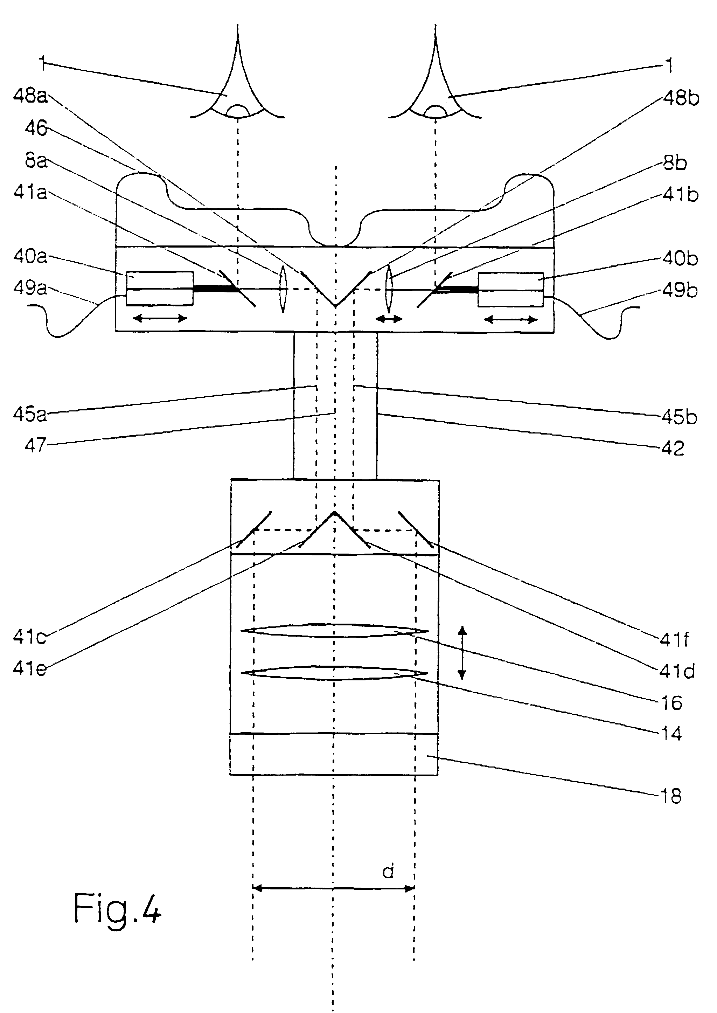

Fig.4 zeigt zwei Anwenderaugen beim Blick durch eine Positionierauflage 46 für das Anwendergesicht und über zwei seitlich verschiebbare Umlenkspiegel 41b, die von je einer Augenabstandseinstellvorrichtung 40a,b fernverstellbar sind. Entsprechende Fernsteuerleitungen sind mit 49a,b angedeutet.

Zwischen den Umlenkspiegeln 41 und mit diesen korrespondierenden weiteren Umlenkspiegeln 48a,b ist je ein Okular 8a,b untergebracht, von denen wenigstens eines verstellbar ist.

Durch die beiden Umlenkspiegel 48 wird der Vorrichtungsaufbau in seiner Mitte deutlich verjüngt, wobei eventuell ein einziger Tubus 42 ausreicht um die beiden Strahlengänge aufzunehmen. Eine gegengleiche Umlenkspiegelanordnung mit Spiegeln 41c-f verbreitert die Stereobasis d wieder auf ein gewünschtes Mass. In bekannter Art und Weise ist nach den Umlenkspiegeln 41c-f ein Zoom 16 und eine Vergrösserungseinstellvorrichtung 14 (oder pro Strahlengang je ein Zoom 16 bzw. je eine -vorrichtung 14 ) untergebracht.

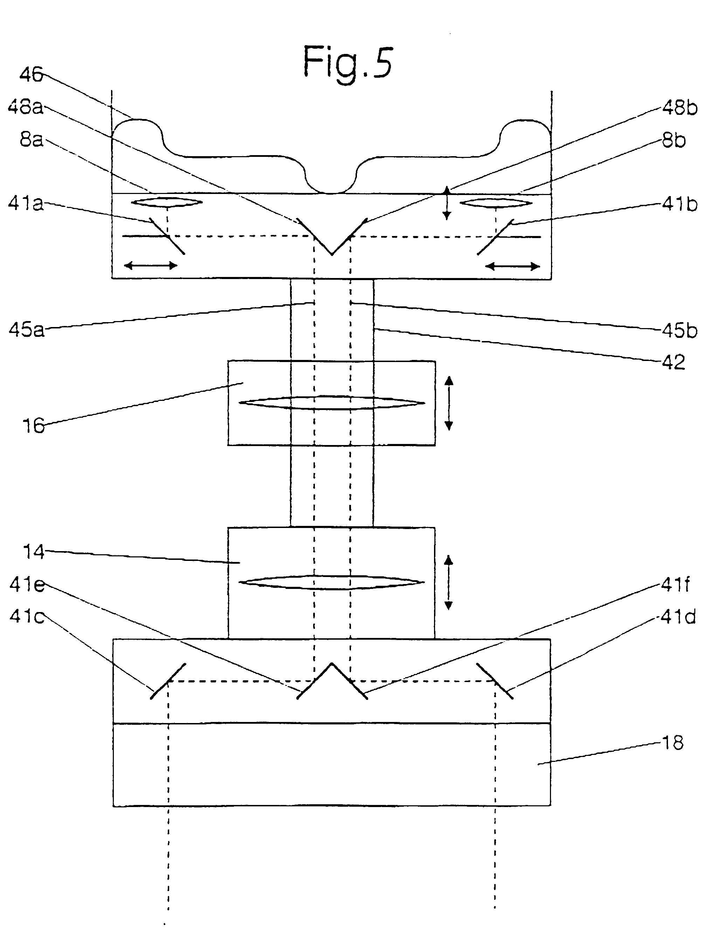

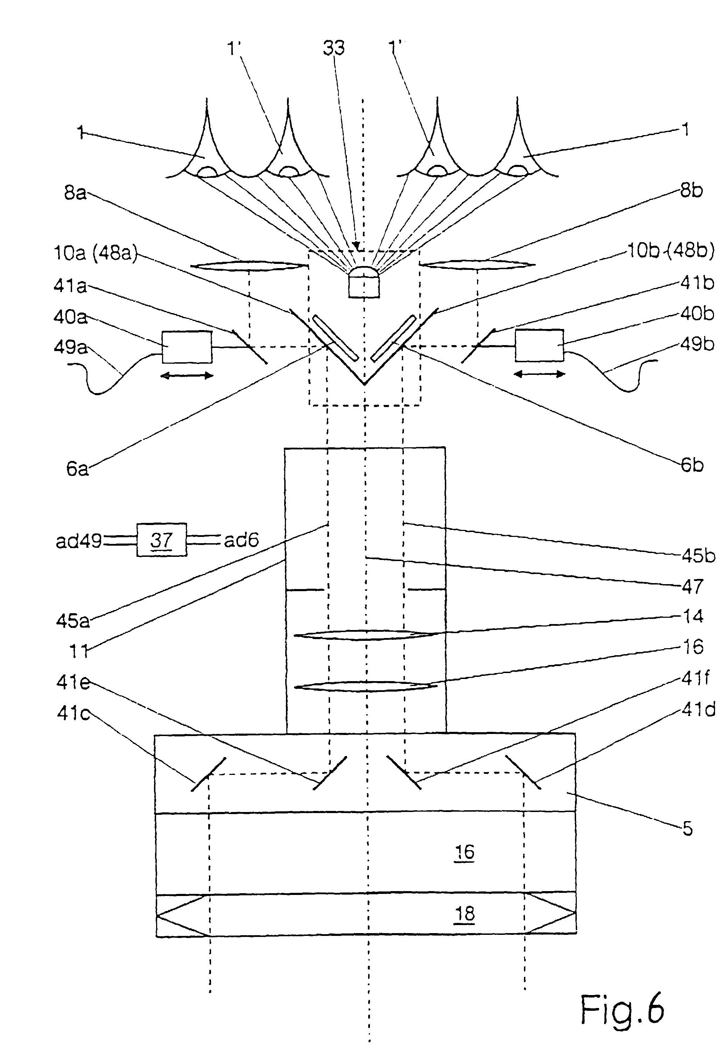

Demgegenüber stellt Fig.5 eine elegantere Lösung dar. Fig.6 zeigt ausserdem den Vorteil des Hand in Hand mit der Erfindung gehenden Versatzes der Tuben zur Vorrichtungsmitte 47, zumal derart ein einziges Zoom 16, sowie eine einzige Fokuseinstellvorrichtung 14 für beide Strahlengänge genutzt werden kann, ohne die Stereobasis vor dem Hauptobjektiv einzuschränken. Den selben Effekt kann man auch aus Fig.5 entnehmen, deren Gegenstand auch ohne Fernsteuerung für die Umlenkspiegel 41a,b eine Erfindung darstellt. Der seitlich des Tubus 42 gewonnenen Platz kann, wie Fig.3 zeigt, gut genützt werden.

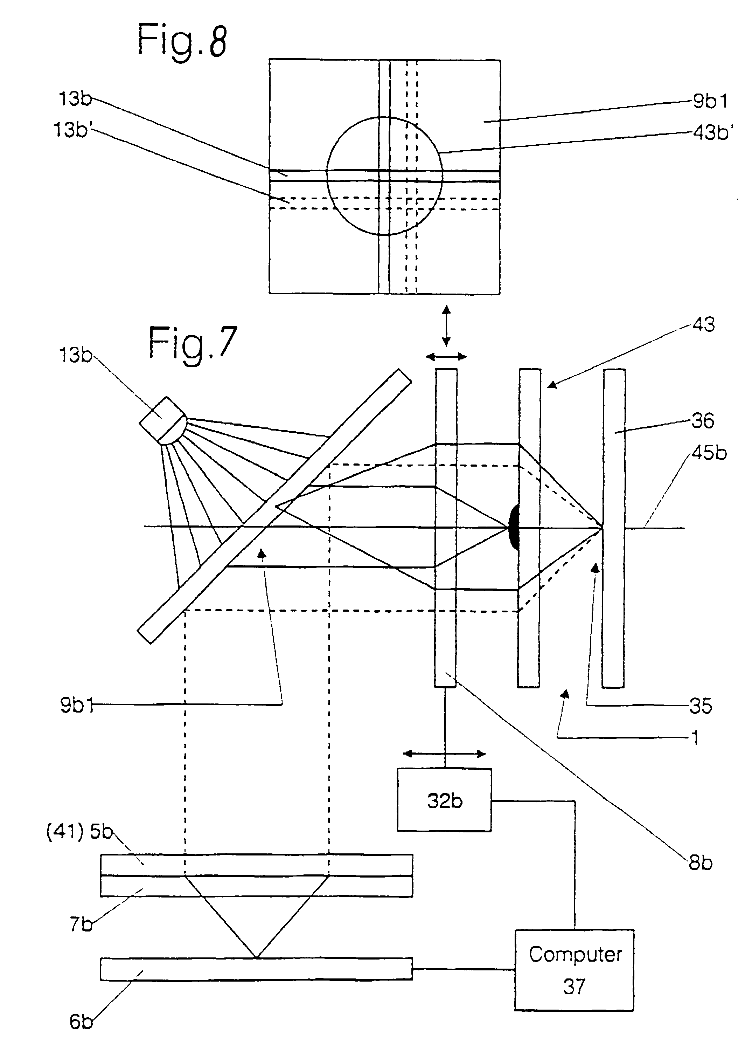

Ein beispielhafter Messaufbau ist symbolisch der Fig.7 und 8 zu entnehmen, wobei das verstellbare Okular 8b symbolisch dreidimensional verstellt werden kann, zum einen, um den Augenabstand des Anwenders und zum anderen, um dessen Fehlsichtigkeit auszugleichen. Das Anwenderauge 1 mit seiner Oberfläche und Pupille 43 sowie seiner Netzhaut 36 wird dabei hinsichtlich seiner Position in bezug auf die Strahlengangmitte 45b untersucht. Ein Fadenkreuz 9b1 o.dgl. wird mittels Lichtquelle 13b auf die Netzhaut 36 als Bild 35 abgebildet. Die Netzhaut selbst wird durch das Okular 8b und über das Fadenkreuz 9b1, das auf einem teilreflektierenden Spiegel ausgebildet ist, durch einen weiteren teildurchlässigen Spiegel 5b und gegebenenfalls durch eine Abbildungsoptik 7b auf ein Messarray bzw. -CCD (6b) abgebildet. Auf letzteres wird auch das Bild der Pupille 43 abgebildet. Darüber hinaus kann auch das am Okular 8b reflektierte Bild des Fadenkreuzes 9b1 auf das CCD 6b abgebildet werden. Aus allen oder einzelnen verschiedenen Abbildungen kann die Messvorrichtung 33 bzw. die Messdatenauswertevorrichtung 37 die tatsächliche Pupillenlage in bezug auf die Strahlengangmitte 45b errechnen und entsprechende Steuerungen an der Verstelleinrichtung 32b bzw. 41b vornehmen.

Fig.8 deutet - stark ausgezogen - einen gut zentrierten Strahlengang an, während das strichlierte Kreuz 13b' eine Abbildung des Fadenkreuzes 9b1 eines nichtzentrierten Anwenderauges 1 darstellt.

In der Regel werden alle Funktionen und Steuerungen der beschriebenen Geräte von der Datenverarbeitung gesteuert. Zur schnelleren Datenverarbeitung ist dieser Datenverarbeitung 24 eine Datenaufbereitungseinheit 25 gemäss zitierter Anmeldung CH 1091/94 vorgeschaltet, die alle, zum Teil unterschiedlichen Datenformate auf ein gemeinsam verarbeitbares Format umwandelt bzw. Befehlsdaten in geeignete Gerätesteuerungsdaten umwandelt.

Die Anmeldung ist insofern nicht beschränkend und umfasst auch die sich aus den zitierten Anmeldungen ergebenden Kombinationen, an deren optimalem Ende ein völlig vollautomatisches, sich selbst regulierendes Mikroskop steht.

Ein Beispiel für ein automatisches Augenrefraktometer ist in der DE-A-2937891 beschrieben, wie es für den Gegenstand der Erfindung von einem Fachmann nach Kenntnis der Erfindung adaptierbar wäre. Eine Kombination mit einem solchen Refraktometer liegt daher im Rahmen der Erfindung.

### Bezugszeichenliste

- 1: Anwenderauge
- 2: LCD oder CRT für Display im Okularstrahlengang
- 3a,b: Pupillenpositionserkennungseinrichtung
- 4a,b: Einblendelement
- 5a,b: teildurchlässiger IR-Spiegel (Reflexionsrate für IR-Strahlung gegen 100%, für übrige Strahlung gegen 0%)
- 6a,b: CCD oder funktionsähnlicher Sensor z. Pupillenlagebestimmung
- 7a,b,c,d,e: Abbildungsoptik
- 8a,b: Okularlinse
- 9a,b,c: Fadenkreuz
- 10a,b,c,d,e,f: Teilerspiegel
- 11: LCD Hintergrundbeleuchtung
- 12: beispielhaftes Bild des LCD oder CRT, wie für das Auge 1 durch das Okular 8 gesehen, dem Bild des betrachteten Objektes überlagert;
- 13a,b: LED für IR-Licht, eventuell getaktet bzw. nur während Messung in Betrieb;
- 14a,b: Zoom
- 15: Zoomantrieb
- 16: Fokuseinstellungsantrieb
- 17a,b: Beleuchtung
- 18: Hauptobjektiv
- 19: Videorecorder z. Abspielen und Aufnehmen von Videobildem;
- 20: Bildliefervorrichtung für MRI-Daten vom betrachteten Objekt;
- 21: Bildliefervorrichtung für Röntgendaten vom betrachteten Objekt;
- 22: Bildinformationsgenerator für patientenbezogene Informationen, z.B. wie Name, Alter, Blutdruck, Herzfunktion usw.
- 23: Mikroskop
- 24: Datenverarbeitung
- 25: Datenaufbereitung zur Datenformatvereinheitlichung (Leica Box)
- 26: Videokamera
- 27: Fussschalter
- 28: Teilerwürfel
- 29: Teilerfläche
- 30: Spiegelfläche insbesondere für IR-Strahlen;
- 31: reflektierende Fase;
- 32: Verstelleinrichtung;
- 33: Messvorrichtung umfasst wenigstens 13,6 und 37;
- 34: Messstrahl;
- 35: Bild;
- 35': Abbildung des Bildes 35;
- 36: Netzhaut;
- 37: Messdatenauswertevorrichtung;
- 38: Speicher;
- 39: Loch-, Schlitzblende; kann verspiegelt ausgebildet sein - auch teildurchlässig;
- 40a,b: Augenabstandseinstellvorrichtung;
- 41a,b: Umlenkspiegel;
- 42a,b: Tubus;
- 43a,b: Pupille;
- 43': Abbildungsstrahlengang für das Bild der Pupille;
- 44: dünne Ätzspuren bilden das Fadenkreuz
- 45a,b: Strahlengangmitte
- 46: Positionierauflage
- 47: Vorrichtungsmitte
- 48a,b: kooperierende Umlenkspiegel
- 49a,b: Femsteuerdrähte
- d: Stereobasis

## Patentansprüche

1. Mikroskop, insbesondere Stereomikroskop, mit wenigstens zwei Tuben (42), mit verstellbaren Okularen (8) und einer automatischen, anwenderaugenabhängigen elektrischen ersten Verstelleinrichtung (32) und je einer Messvorrichtung (33) sowie einer Messdatenauswertevorrichtung (37) dafür, wobei der Messdatenauswertevorrichtung (37) ein Speicher zugeordnet ist, der die Einstellung des Okulars (8) - im Falle eines Stereomikroskops beider Okulare (8) voneinander unabhängig - erfasst und diese Einstelldaten hinsichtlich bestimmter an- bzw. eingebbarer Anwender abrufbar macht.

2. Mikroskop nach Anspruch 1, wobei jede Messvorrichtung (33) im Betriebszustand einen Messstrahl (34) für das Abbilden eines Bildes (35) auf der Netzhaut (36) des Anwenderauges (1) - vorzugsweise durch das Okular (8) und gegebenenfalls durch weitere optische Bauteile des Mikroskops - aussendet, und dass die Messvorrichtung (3) ein CCD oder einen funktionsähnlichen Sensor (6), gegebenenfalls eine Abbildungsoptik (7) und die Messdatenauswertevorrichtung (37) zur Auswertung des im Betriebszustand auf der Netzhaut (36) abgebildeten Bildes (35) und den sich daraus ableitenden optischen Eigenschaften des Anwenderauges (1) umfasst.

3. Mikroskop nach Anspruch 1 oder 2, wobei es neben der Messdatenauswertevorrichtung (37) eine Datenverarbeitungsvorrichtung (24) umfasst, die im Betriebszustand die Augen- bzw. Pupillenstellung des Anwenderauges (1) zur Steuerung von Stellorganen, Geräten oder Vorrichtungen usw. am oder in Verbindung mit dem Mikroskop erfasst.

4. Mikroskop nach einem der vorhergehenden Ansprüche, wobei die Messdatenauswertevorrichtung (37) so aufgebaut ist, dass sie im Betriebszustand das bzw. jedes Okular (8) in Abhängigkeit von sich verändernden Messwerten aus der Messvorrichtung (33) kontinuierlich verstellt.

5. Mikroskop nach einem der vorhergehenden Ansprüche, wobei zur Erzeugung des Messstrahls (34) eine Leucht- oder Laserdiode (13b) vorgesehen ist, der Mittel zur Definition des Bildes auf der Netzhaut vorgeschaltet sind, z.B. eine dem Okular (8) bzw. Anwenderauge (1) zugewandte Loch- oder Schlitzschablone (39) oder ein Fadenkreuz (9), um das Bild (35) auf der Netzhaut (36) zu definieren, und/oder dass zur Erzeugung der Augenbeleuchtung eine Leucht- oder Laserdiode (13a) vorgesehen ist, die vorzugsweise im unsichtbaren IR-Bereich arbeitet und gegebenenfalls mit dem Messsensor bzw. der Ausleserate des CCD (6) getaktet ist.

6. Stereomikroskop mit zwei Tuben (42), von denen wenigstens ein Tubus relativ zum anderen mit einer zweiten Verstelleinrichtung (40) verstellbar ist, nach einem der vorhergehenden Ansprüche, wobei die zweite Verstelleinrichtung (40) elektrisch fernbedienbar ist.

7. Stereomikroskop nach Anspruch 6, wobei die Verstelleinrichtung (40) im Betriebszustand in Abhängigkeit vom tatsächlichen Augenabstand eines Anwenders selbsttätig - und gegebenenfalls kontinuierlich - die Tuben (42) relativ zueinander verstellt.

8. Stereomikroskop nach Anspruch 6 oder 7, wobei wenigstens einem Anwenderauge (1) eine Messvorrichtung (33) für das Messen seiner Relativposition zum anderen Anwenderauge (1) oder zum betreffenden Okular (8) zugeordnet ist, wobei die Messvorrichtung (33) die zweite Verstellvorrichtung (40) steuert.

9. Stereomikroskop nach Anspruch 7 oder 8, wobei die Messvorrichtung (33) im Betriebszustand eine Beleuchtung (13) für das Beleuchten der Augenoberfläche eines Anwenderauges (1) und eine Vorrichtung zur Abbildung dieser Oberfläche auf einem Messsensor umfasst, insbesondere auf einem CCD, der bzw. das relativ zur Mittelachse (45b) des Strahlenganges ausgerichtet ist, und dass die Messvorrichtung (33) eine Messdatenauswertevorrichtung (37) zur Auswertung des abgebildeten Bildes der Augenoberfläche (35) und der sich daraus ableitenden Relativposition des betreffenden Anwenderauges (1) zur Strahlengangmitte (45b) umfasst, wobei die Messdatenauswertevorrichtung (37) oder die Datenverarbeitungseinrichtung (24) die Verstelleinrichtung (32) steuert.

10. Stereomikroskop nach einem der vorhergehenden, Ansprüche 1 bis 5 mit einer Augenabstandseinstellvorrichtung (40), wobei letztere fernbedienbar ist und eine Pupillenpositionserkennungseinrichtung (3) umfasst, die die Position jeder Pupille (43) jedes Anwenderauges (1) von der diesem zugeordneten Strahlengangmitte (45) erkennbar macht, so dass automatisch der Tubenabstand an den Augenabstand des Anwenders anpassbar ist, wobei vorzugsweise die Tuben (42) mit Bauteilen der Messvorrichtung (33) bewegungsgekoppelt sind, und wobei gegebenenfalls das Bild (35) aus der Loch- oder Schlitzblende (39) auf der Netzhaut (36) und die Abbildung des Umfanges der Pupille (43) des Anwenderauges (1) auf dem CCD (6) als Mass für die Zentrierung um die Strahlengangmitte (45) dient.

11. Stereomikroskop, insbesondere Operationsmikroskop, nach einem der vorhergehenden Ansprüche, wobei im Okularbereich eine Positionierauflage (46) für den Kopf bzw. das Gesicht eines Anwenders vorgesehen ist, die durch Fixierung von Gesichtspartien des Anwenders als Horizontal- und/oder Vertikalreferenz und/oder Entspannungshalterung für die Einstellung der Okulare (8) und des Tubenabstandes dient.

12. Mikroskop nach einem der vorhergehenden Ansprüche, wobei ein Sensor oder Schalter in Kopfnähe eines Anwenders bzw. bei der Positionierauflage (46) die Anwesenheit eines Anwenders überwacht und die zuletzt getroffene Einstellung der Okulare bzw. Tuben beibehält bzw. eine Nachjustierung infolge Messung in den anwenderfreien Raum bei entferntem Anwender unterbindet.

13. Stereomikroskop nach einem der vorhergehenden Ansprüche, wobei jedem Okular (8) ein Umlenkspiegel (41) zugeordnet ist, der den Okularstrahlengang bzw. Vergrösserungsstrahlengang gegen die Vorrichtungsmitte (47) umlenkt, wobei beiderseits der Vorrichtungsmitte (47) kooperierende Umlenkspiegel (48) - welche vorzugsweise zur Schielfehlerkorrektur, insbesondere gemeinsam mit einem allfälligen Zoom (14), verstellbar - vorgesehen sind, die den Vergrösserungsstrahlengang wieder etwa parallel zur Vorrichtungsmitte in Objektrichtung lenken, und wobei jeder Vergrösserungsstrahlengang durch je ein weiteres Paar Umlenkspiegel (41) so umgelenkt ist, dass sich eine gegenüber dem Abstand der beiden Strahlengänge voneinander nach der letztgenannten Umlenkung vergrösserte Stereobasis des Mikroskops ergibt.

14. Stereomikroskop, insbesondere Operationsmikroskop, nach Anspruch 13, wobei seitlich der parallel zueinander versetzten Strahlengänge modulartige Zusatzgeräte, wie Videokamera und/oder LCD-Bildschirm mit Einspiegelvorrichtung, angeordnet sind.

15. Stereomikroskop mit einem Zoom (14) und/oder einer Brennweiteneinstellung (16) nach einem der Ansprüche 13 oder 14, wobei das Zoom (14) und/oder die Brennweiteneinstellung (16) im Bereich der parallel zueinander versetzten Strahlengänge angeordnet sind, so dass für beide Strahlengänge nur ein einziges Zoom (14) oder nur eine einzige Brennweiteneinstellung (16) vorgesehen ist.

## Claims

1. Microscope, in particular stereomicroscope, with at least two tubes (42), with adjustable eyepieces (8) and an automatic first electrical adjusting equipment (32) dependent on the eye of the user and a respective measuring device (33) as well as a measurement data evaluating device (37) therefor, wherein the measurement data evaluating device (37) is associated with a storage device which detects the setting of the eyepiece (8) - in the case of a stereomicroscope, both eyepieces (8) each independently of the other - and makes these setting data callable up with regard to certain indicatable or enterable users.

2. Microscope according to claim 1, wherein each measuring device (33) in the operating state emits a measuring beam (34) for the imaging of an image (35) onto the retina (36) of the eye (1) of the user - preferably through the eyepiece (8) and, in a given case, through further optical components of the microscope - and that the measuring device (33) comprises a charge-coupled device or a functionally similar sensor (6), in a given case an optical imaging system (7) and the measurement data evaluating device (37) for the evaluation of the image (35) imaged on the retina (36) in the operating state and the optical properties of the eye (1) of the user to be derived therefrom.

3. Microscope according to claim 1 or 2, wherein it comprises, apart from the measurement data evaluating device (37), a data-processing device (24), which in the operating state detects the eye or pupil setting of the eye (1) of the user for the control of setting organs, instruments or devices and so forth at or in connection with the microscope.

4. Microscope according to one of the preceding claims, wherein the measurement data evaluating device (37) is so built up that, in the operating state, it continuously adjusts the or each eyepiece (8) in dependence on changing measurement values from the measuring device (33).

5. Microscope according to one of the preceding claims, wherein - for the production of the measuring beam (34) - a light-emitting or laser diode (13b) is provided, upstream of which are means for definition of the image on the retina, for example a hole or slot template (39) or a graticule (9) facing the eyepiece (8) or the eye (1) of the user, in order to define the image (35) on the retina (36) and/or that, for the production of the illumination of the eye, a light-emitting or laser diode (13a) is provided, which preferably operates in the invisible infrared range and is, in given case, keyed with the measurement sensor or the read-out rate of the charge-coupled device (6).

6. Stereomicroscope with two tubes (42), of which at least one tube is displaceable relative to the other by a second adjusting equipment (40), according to one of the preceding claims, wherein the second adjusting equipment (40) is remotely controllable electrically.

7. Microscope according to claim 6, wherein the adjusting equipment (40) in the operating state displaces the tubes (42) each relative to the other automatically and, in a given case, continuously in dependence on the actual eye spacing of a user.

8. Microscope according to claim 6 or 7, wherein at least one eye (1) of the user is associated with a measuring device (33) for measuring its position relative to the other eye (1) of the user or to the eyepiece (8) concerned, wherein the measuring device (33) controls the second adjusting equipment (40).

9. Microscope according to claim 7 or 8, wherein the measuring device (33) in the operating state comprises an illumination (13) for illuminating the eye surface of an eye (1) of a user and a device for imaging this surface onto a measuring sensor, in particular onto a charge-coupled device, which is oriented relative to the centre line (45b) of the ray path and that the measuring device (33) comprises a measurement data evaluating device (37) for evaluation of the projected image of the eye surface (35) and the position, which is derived therefrom, of the concerned eye (1) of the user relative to the centre line (45b) of the ray path, wherein the measurement data evaluating device (37) or the data-processing device (24) controls the adjusting equipment (32).

10. Microscope according to one of the preceding claims 1 to 5, with an eye spacing adjusting device (40), wherein the latter is remotely controllable and comprises a pupil position recognition equipment (3), which makes recognisable the position of each pupil (43) of each eye (1) of the user from the ray path centre (45) associated therewith so that the tube spacing is automatically adaptable to the eye spacing of the user, wherein the tubes (42) are preferably coupled for movement with components of the measuring device (33) and wherein, in a given case, the image (35) from the hole or slot aperture (39) on the retina (36) and the imaging of the circumference of the pupil (43) of the eye (1) of the user onto the charge-coupled device (6) serves as a measure for the centring about the ray path centre (45).

11. Stereomicroscope, in particular surgical microscope, according to one of the preceding claims, wherein a positioning support (46) for the head or the face of a user is provided in the eyepiece region and, by fixing of face positions of the user, serves as horizontal and/or vertical reference and/or relief mounting for the setting of the eyepieces (8) and of the spacing of the tubes.

12. Microscope according to one of the preceding claims, wherein a sensor or switch either in the proximity of the head of a user or at the positioning support (46) monitors the presence of a user and maintains the last made setting of the eyepieces or of the tubes or prevents a further adjustment in consequence of a measurement into the space free of user when a user has gone away.

13. Microscope according to one of the preceding claims, wherein each eyepiece (8) is associated with a deflecting mirror (41), which deflects the eyepiece ray path or the enlargement ray path towards the centre (47) of the device, wherein co-operating deflecting mirrors (48), which are preferably adjustable for correction of errors caused by squinting, in particular together with a possibly present zoom (14) are provided at both sides of the centre (47) of the device and deflect the enlargement ray path again in the direction of the object about parallelly to the centre of the device and wherein each enlargement ray path is so deflected by a respective further pair of deflecting mirrors (41) that a stereobase, which is enlarged by comparison with the spacing of both the ray paths each from the other after the last-mentioned deflection, of the microscope results.

14. Stereomicroscope, in particular surgical microscope, according to claim 13, wherein modular accessory instruments, such as a video camera and/or a liquid crystal display picture screen with an inward deflection device, are arranged laterally of the ray paths each displaced parallelly relative to the other.

15. Stereomicroscope with a zoom (14) and/or a setting (16) of focal length, according to claim 13 or 14, wherein the zoom (14) and/or the setting (16) of focal length are arranged in the region of the ray paths each displaced parallelly relative to the other so that only a single zoom (14) or only a single setting (16) of focal length is provided for both ray paths.

## Revendications

1. Microscope, en particulier stéréomicroscope, avec au moins deux tubes (42), avec oculaires réglables (8) et un premier dispositif de réglage automatique, électrique (32), dépendant des yeux de l'utilisateur et chacun un dispositif de mesure (33), ainsi qu'un dispositif d'évaluation des données de mesure (37) dans ce but, où au dispositif d'évaluation des données de mesure (37) est affectée une mémoire qui saisit l'ajustement de l'oculaire (8), dans le cas d'un stéréomicroscope à deux oculaires (8) indépendants l'un de l'autre, et rend appelables ces données d'ajustement par rapport à un utilisateur défini ou, respectivement, pouvant les introduire.

2. Microscope selon la revendication 1, où chaque dispositif de mesure (33) émet, en état de fonctionnement, un rayon de mesure (34) pour la reproduction d'une image (35) sur la rétine (36) de l'oeil (1) de l'utilisateur, avantageusement à travers l'oculaire (8) et, le cas échéant, par d'autres constituants optiques de microscope, et en ce que le dispositif de mesure (3) comporte un CCD ou un capteur (6) d'un fonctionnement analogue, le cas échéant, une optique de reproduction (7), et le dispositif d'évaluation des données de mesure (37) pour l'évaluation de l'image formée à l'état de fonctionnement sur la rétine (36) et les propriétés optiques qui en découlent de l'oeil (1) de l'utilisateur.

3. Microscope selon la revendication 1 ou 2, où il comporte, outre le dispositif d'évaluation de données de mesure (37), un dispositif de traitement de données (24) qui, à l'état de fonctionnement, saisit la position de l'oeil, ou respectivement de la pupille de l'oeil (1) de l'utilisateur pour l'ajustement d'organes de réglage, d'appareils ou dispositifs et autres, sur ou en liaison avec le microscope.

4. Microscope selon l'une des revendications précédentes, où le dispositif d'évaluation des données de mesure (37) est construit de manière qu'à l'état de fonctionnement, l'oculaire (8) ou, respectivement, chaque oculaire se déplace continuellement selon des valeurs de mesure changeant, provenant du dispositif de mesure (33).

5. Microscope selon l'une des revendications précédentes, où pour la production du rayon de mesure (34), une photodiode ou diode à laser (13b) est prévue, qui est précédée de moyens pour la définition de l'image sur la rétine, par exemple un gabarit à trou ou à fente (39) tourné vers l'oculaire (8) ou, respectivement, l'oeil de l'utilisateur (1), ou bien une croisée de fils (9) pour définir l'image (35) sur la rétine (36) et/ou en ce que, pour la production de l'éclairement de l'oeil, une photodiode ou diode à laser (13a) est prévue qui, avantageusement, fonctionne dans le domaine IR invisible et, le cas échéant, est synchronisée sur le capteur de mesure ou, respectivement, la fréquence de lecture du CCD (6).

6. Stéréomicroscope avec deux tubes (42), dont au moins un tube est réglable par rapport à l'autre au moyen d'un second dispositif de réglage (40), selon l'une des revendications précédentes, où le second dispositif de réglage (40) est électriquement télécommandable.

7. Stéréomicroscope selon la revendication 6, où le dispositif de réglage (40), à l'état de fonctionnement, règle, selon la distance réelle des yeux d'un utilisateur, automatiquement et, le cas échéant, continuellement, les tubes (42) l'un relativement à l'autre.

8. Stéréomicroscope selon la revendication 6 ou 7, où au moins un oeil (1) d'un utilisateur est affecté un dispositif de mesure (33) pour la mesure de sa position relative par rapport à l'autre oeil (1) de l'utilisateur, ou par rapport à oculaire correspondant (8), et le dispositif de mesure (33) commande le second dispositif de réglage (40).

9. Stéréomicroscope selon la revendication 7 ou 8, où le dispositif de mesure (33), à l'état de fonctionnement, comporte un éclairement (13) pour l'éclairement de la surface de l'oeil d'un oeil d'utilisateur (1), et un dispositif pour le reproduction de cette surface sur un capteur de mesure, en particulier sur un CCD, qui est dirigé relativement à l'axe médian (45b) de la trajectoire des rayons, et en ce que le dispositif de mesure (33) comporte un dispositif d'évaluation de données de mesure (37) pour l'évaluation de l'image reproduite de la surface de l'oeil (35), et de la position relative qui en découle de l'oeil correspondant de l'utilisateur (1) par rapport au milieu de la trajectoire des rayons (45b), où le dispositif d'évaluation de données de mesure (37) ou le dispositif de traitement de données (24) commande le dispositif de réglage (32).

10. Stéréomicroscope selon l'une des revendications 1 à 5 qui précèdent, avec un dispositif d'ajustement de la distance des yeux (40), où ce dernier est télécommandable et comporte un dispositif de reconnaissance de la position de la pupille (3), qui rend reconnaissable la position de chaque pupille (43) de chaque oeil (1) de l'utilisateur, par rapport au milieu de la trajectoire des rayons (45) qui lui est affecté, de manière qu'automatiquement la distance des tubes puisse être adaptée à la distance des yeux de l'utilisateur, et avantageusement les tubes (42) sont couplés en mouvement à des constituants du dispositif de mesure (33) et où, le cas échéant, l'image (35) provenant de l'obturateur à trou ou à fente (39) sur la rétine (36) et la reproduction du pourtour de la pupille (43) de l'oeil (1) de l'utilisateur sur le CCD (6) sert de masse pour le centrage autour du milieu de la trajectoire des rayons (45).

11. Stéréomicroscope, en particulier microscope pour des opérations, selon l'une des revendications précédentes, où, dans la zone de l'oculaire, est prévu un appui de positionnement (46) pour la tête ou, respectivement, le visage d'un utilisateur qui, par fixation de parties du visage de l'utilisateur, sert de référence horizontale et/ou verticale et/ou de retenue de détente pour l'ajustement de l'oculaire (8) et de la distance des tubes.

12. Microscope selon l'une des revendications précédentes, où un capteur ou commutateur à proximité de la tête d'un utilisateur ou, respectivement, à l'appui de positionnement (46) surveille la présence d'un utilisateur et conserve la dernière position obtenue de l'oculaire ou, respectivement, des tubes ou, respectivement, provoque un post-ajustement à la suite d'une mesure dans l'espace sans utilisateur, lorsque l'utilisateur s'est éloigné.

13. Stéréomicroscope selon l'une des revendications précédentes, où à chaque oculaire (8) est affecté un miroir déflecteur (41) qui dévie la trajectoire des rayons de l'oculaire ou, respectivement, la trajectoire des rayons d'agrandissement vers le milieu du dispositif (47), et de chaque côté du milieu du dispositif (47) sont prévus des miroirs déflecteurs coopérants (48) réglables avantageusement pour la correction de défaut de déport, en particulier avec un zoom ordinaire (14), qui dévient la trajectoire des rayons d'agrandissement, de nouveau à peu près parallèlement au milieu du dispositif dans la direction de l'objet, et où chaque trajectoire des rayons d'agrandissement est déviée à travers une autre paire de miroirs déflecteurs (41), de façon à obtenir une base stéréo du microscope agrandie, par rapport à la distance des deux trajectoires des rayons, l'une par rapport à l'autre, après la dernière reflexion nommée.

14. Stéréomicroscope, en particulier microscope pour les opérations, selon la revendication 13, où sont agencés a côté des trajectoires des rayons déplacées parallèlement l'une à l'autre, des appareils supplémentaires en modules comme des caméras vidéo et/ou des écrans de LCD avec un dispositif de reproduction.

15. Stéréomicroscope avec un zoom (14) et/ou un ajustement de la largeur focale (16), selon l'une des revendications 13 ou 14, où le zoom (14) et/ou l'ajustement de la largeur focale (16) sont agencés dans la zone des trajectoires des rayons décalées parallèlement l'une à l'autre, de façon que, pour les deux trajectoires des rayons, ne soit prévu qu'un seul zoom (14) ou bien qu'un seul ajustement de la largeur focale (16).
